Europäisches Patentamt

(19) European Patent Office

Office européen des brevets

(11) Numéro de publication: **0 142 464**
**A1**

(12) # DEMANDE DE BREVET EUROPEEN

(21) Numéro de dépôt: **84810435.2**

(22) Date de dépôt: **10.09.84**

(51) Int. Cl.⁴: **G 01 B 11/02**
**G 01 B 11/00**

(30) Priorité: **12.09.83 CH 4950/83**

(43) Date de publication de la demande:
**22.05.85 Bulletin 85/21**

(84) Etats contractants désignés:
**AT BE CH DE FR GB IT LI LU NL SE**

(71) Demandeur: BATTELLE MEMORIAL INSTITUTE
7 route de Drize
CH-1227 Carouge/Genève(CH)

(72) Inventeur: Gross, Daniel
40, route des Acacias
CH-1227 Carouge(CH)

(72) Inventeur: Dähne, Claus
103 Avenue du Bois de la Chapelle
CH-1213 Onex(CH)

(74) Mandataire: Dousse, Blasco et al,
7, route de Drize
CH-1227 Carouge/Genève(CH)

(54) **Procédé et dispositif pour déterminer la position d'un objet par rapport à une référence.**

(57) Ce procédé permet de déterminer la position d'un objet (4) situé dans le lieu de focalisation d'un faisceau lumineux polychromatique ($\lambda_1$, $\lambda_2$, $\lambda_n$), formé par une lentille holographique (3), en analysant le spectre de la lumière réfléchie par l'objet et en déterminant ensuite la longueur d'onde du faisceau réfléchi ($\lambda_2$) dont la densité est maximale. Cette longueur d'onde ($\lambda_2$) est caractéristique de la position de l'objet (4) par rapport à la lentille holographique (3) ou à tout point du lieu de focalisation.

FIG. I

EP 0 142 464 A1

## PROCEDE ET DISPOSITIF POUR DETERMINER LA POSITION D'UN OBJET

### PAR RAPPORT A UNE REFERENCE

La présente invention a pour objet un procédé et un dispositif pour déterminer la position d'un élément de surface d'un objet par rapport à une échelle de référence, du type dans lequel on focalise un faisceau lumineux englobant une pluralité d'ondes lumineuses en une pluralité de points correspondant aux foyers de chaque onde, et l'on détermine la longueur d'onde dont le point de focalisation se trouve sur cet élément de surface.

On connaît déjà les brevets DE 19 62515 et GB 2 077 421 décrivant un procédé et des dispositifs de ce genre.

Le brevet DE 19 62515 traite d'un capteur de distance optique sans contact, dans lequel un faisceau lumineux est focalisé en une pluralité de foyers distincts. Ce capteur permet de déterminer la position d'un objet se trouvant entre deux de ces foyers. On compare l'intensité respective des deux ondes lumineuses réfléchies par l'objet et convergeant en ces foyers. La position de l'objet par rapport au capteur est définie lorsque ces ondes ont une intensité égale. On déplace le capteur pour obtenir cette égalité. La position finale du capteur permet de situer l'objet. Ce capteur est en fait un capteur hybride, puisqu'il comporte un système de mesure mécanique (repérage de la position du capteur) et optique (localisation de l'objet par rapport au capteur).

Le brevet GB 2 077 421 décrit un capteur optique et un procédé pour mesurer les déplacements d'un objet, où l'on focalise deux faisceaux monochromatiques de couleur différente, d'intensité égale, à axes confondus, pour obtenir deux points de focalisation distincts situés à égale distance d'un plan de référence. On mesure l'intensité relative des ondes lumineuses des deux faisceaux, après réflexion par l'objet. Cette intensité relative peut être caractérisée par la différence ou par le quotient des intensités respectives des ondes lumineuses. L'évolution de la valeur de cette intensité relative est caractéristique des déplacements de l'objet.

Dans les deux cas ci-dessus, on détermine la position d'un objet en comparant deux signaux optiques. La précision de cette comparaison est à l'évidence liée à l'intensité des signaux. En conséquence, la précision et le pouvoir de résolution de tels capteurs sont très étroitement liés aux propriétés optiques de la surface de l'objet à situer.

La présente invention a pour but de rémédier aux défauts des capteurs existants.

A cet effet, l'invention a, tout d'abord, pour objet un procédé pour mesurer la position d'un élément de surface par rapport à une référence, selon la revendication 1.

L'invention a, de plus, pour objet un dispositif pour la mise en oeuvre de ce procédé, selon la revendication 3.

Le dessin annexé illustre très schématiquement, et à titre d'exemple, deux formes d'exécution du dispositif selon l'invention, ainsi qu'un diagramme explicatif.

La figure 1 est une représentation schématique d'une première forme d'exécution du dispositif selon l'invention.

La figure 2 est un diagramme explicatif représentant une courbe d'étalonnage.

La figure 3 est une représentation schématique d'une autre forme d'exécution du dispositif selon l'invention.

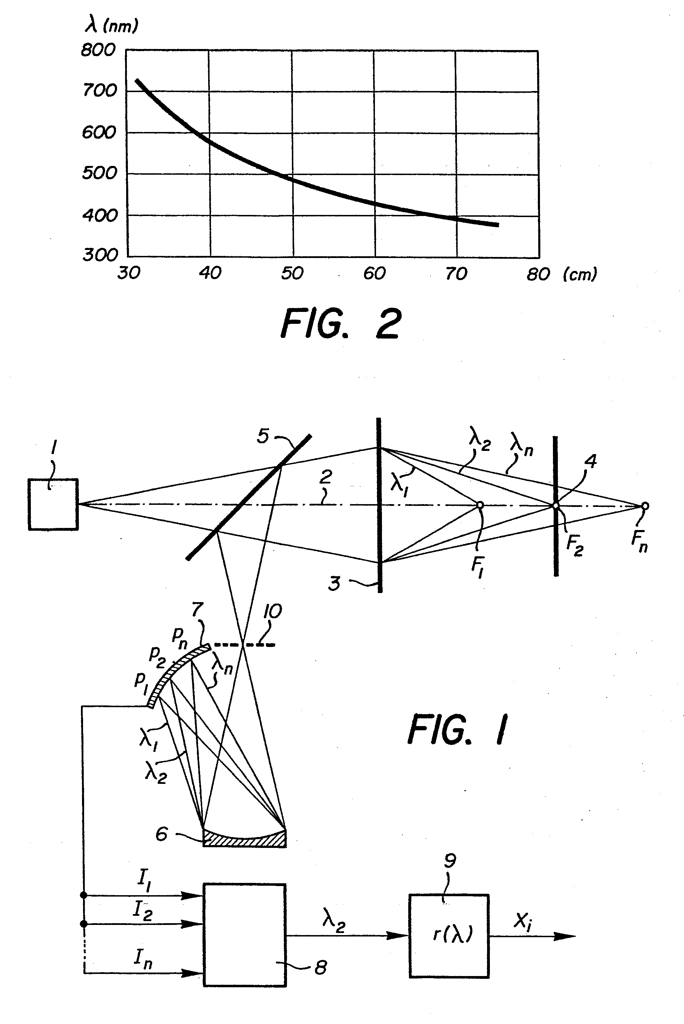

Le dispositif de la figure 1 comprend une source de lumière polychromatique 1, générant un faisceau lumineux. Cette source peut par exemple être une lampe à filament de tungstène, une lampe à arc concentré, ou autre. L'axe 2 de ce faisceau est dirigé sur un élément de surface 4 dont la position est à déterminer et susceptible de réfléchir au moins partiellement les ondes lumineuses. Une lentille holographique 3, à raies concentriques circulaires d'un type courant, focalise les diverses ondes constituant le faisceau en fonction de leur longueur d'onde respective $\lambda_1, \lambda_2 \ldots \lambda_n$.

Si l'on ne prend en considération que les diffractions d'ordre 1, ces diverses ondes lumineuses sont focalisées en une pluralité de foyers ($F_1, F_2 \ldots F_n$) dont l'ensemble constitue un lieu de focalisation F. Pour ce type de lentille holographique, la distance focale est en première approximation proportionnelle à l'inverse de la longueur d'onde de l'onde focalisée. Un diviseur de rayons lumineux tel qu'un miroir semi-transparent 5 dirige les ondes lumineuses issues de la source 1 focalisées par la lentille 3 et réfléchies par l'élément de surface 4 vers une grille de diffraction concave 6. Cette grille de diffraction décompose le spectre de la lumière réfléchie par l'élément de surface et fait converger les ondes de ce spectre sur un réseau linéaire de photodétecteurs 7, chacun de ces photodétecteurs étant considéré comme ponctuel. Ce réseau peut, par exemple, être un circuit CCD. La grille de diffraction 6 dévie les ondes lumineuses selon la relation:

$$\underline{a} \cdot (\sin \alpha + \sin \beta) = k \lambda$$

où $\underline{a}$ est la distance séparant deux raies de la grille 6,

$\alpha$ est l'angle d'incidence des ondes lumineuses,

$\beta$ est l'angle de diffraction de ces ondes,

$k$ est un nombre entier, (pour les diffractions du 1er ordre, $k$  1) et $\lambda$ est la longueur d'onde de la lumière incidente.

Les ondes du spectre de la lumière réfléchie, diffractées par la grille 6, convergent sur le réseau de photodétecteurs ($P_1$, $P_2$...... $P_n$) en des zones dont les surfaces respectives sont d'autant plus grandes que les foyers correspondants ($F_1$, $F_2$... $F_n$) du lieu F sont éloignés de l'élément de surface 4. Il suffit dès lors de mesurer ponctuellement l'intensité lumineuse en chacune de ces zones, au moyen d'un ou de plusieurs photodétecteurs, pour obtenir une information caractéristique de la densité lumineuse en cette zone, donc de la densité de l'onde lumineuse convergeant en cette zone. Un analyseur 8 compare entre elles les intensités respectives des signaux électriques ($I_1$, $I_2$... $I_n$) issus des photodétecteurs, représentatives de la densité respective des ondes lumineuses dirigées sur chacun desdits photodétecteurs, pour rechercher l'onde $\lambda_2$ du spectre de la lumière réfléchie dont la densité est maximale. Un calculateur 9 introduit cette longueur d'onde $\lambda_2$ dans une fonction d'étalonnage $r(\lambda)$ propre à la lentille 3. Cette fonction associe une distance de focalisation à chaque onde focalisée par la lentille.

Dans un but simplificateur, la figure 1 ne représente qu'une seule source lumineuse, mais il est bien évident que l'on peut utiliser une pluralité de sources disposées par exemple côte-à-côte dans un plan sensiblement orthogonal à l'axe 2 du faisceau lumineux, ces sources pouvant être alignées sur un ou plusieurs rangs. L'ensemble du dispositif est alors conçu de manière à pouvoir comparer les densités respectives de plusieurs images constituées chacune d'un ensemble de zones alignées sur un ou plusieurs rangs.

La figure 2 montre un exemple de courbe d'étalonnage d'une lentille holographique à 270 raies concentriques circulaires, dont la raie extérieure a environ 5 mm de diamètre. Les distances de focalisation sont représentées en abscisse et les longueurs d'onde en ordonnée. Pour obtenir cette courbe, on a focalisé six faisceaux lumineux monochromatiques de longueur d'onde connue au moyen de la lentille holographique à étalonner. On a ensuite placé un miroir dans le lieu de focalisation de la lentille, et l'on a mesuré, pour chaque faisceau, la position du miroir pour laquelle la densité de la lumière réfléchie était maximale.

Le calculateur 9 génère un signal $X_i = r(\lambda_2)$ caractéristique de la position de l'élément de surface 4 par rapport à un point de référence ou une échelle de référence. La position du point de référence, respectivement la position de l'échelle de référence, est définie par la courbe d'étalonnage $r(\lambda)$. Le point de référence peut par exemple être constitué par la lentille 3. L'échelle de référence peut notamment être constituée par tout ou partie du lieu de focalisation F.

Pour certains modèles de lentilles holographiques à raies circulaires, il est également possible de mesurer les diffractions d'ordre 2 et même parfois les diffractions d'ordre supérieur à 2. Les diffractions du deuxième ordre focalisent une portion des ondes de longueur d'onde $\lambda_1$, $\lambda_2$... $\lambda_n$ sur des foyers $F'_1$, $F'_2$... $F'_n$ constituant un lieu de focalisation secondaire F' situé entre le lieu de focalisation F et la lentille. L'intensité des ondes focalisées en F' est plus faible que celle des ondes focalisées en F. Il est malgré tout possible d'analyser le spectre de lumière réfléchie par un éventuel objet placé dans ce lieu de focalisation secondaire. Il est ainsi possible de définir au moins deux lieux de focalisation pour chaque lentille holographique et donc de définir au moins deux domaines de mesure distincts pour un même capteur.

Une portion de lumière du faisceau issu de la source 1 est réfléchie par la lentille holographique 3. Cette lumière parasite se superpose aux ondes réfléchies par l'élément de surface 4, constituant ainsi une source non négligeable de bruit de fond. Dans une deuxième forme d'exécution de l'invention, il est possible de remédier à ce défaut en remplaçant la lentille 3 à raies concentriques circulaires par une lentille à raies concentriques légèrement elliptiques, inclinée d'au plus quelques degrés d'angle par rapport au plan normal à l'axe 2 du faisceau lumineux. Cette disposition permet de diriger la portion de lumière parasite réfléchie par la lentille hors du faisceau d'ondes réfléchies par l'élément de surface 4.

Dans une troisième forme d'exécution de l'invention, il est avantageux de disposer un diaphragme à orifice circulaire 10, entre le miroir 5 et la grille de diffraction concave du système d'analyse spectrale, à l'endroit de section minimale de la portion du faisceau lumineux réfléchi par l'élément de surface, de longueur d'onde $\lambda_2$. Ce diaphragme élimine du faisceau réfléchi une portion des ondes qui sont focalisées hors de l'élément de surface, ces ondes apparaissant chacune sur cet élément de surface sous la forme d'un disque dont le diamètre est proportionnel à la distance séparant les foyers respectifs de ces ondes de l'élément de surface; pour autant que les diamètres de ces disques soient supérieurs au diamètre du diaphragme. Le diaphragme stoppe de plus partiellement les ondes réfléchies par la lentille 3; il permet dont de mieux mettre en évidence l'onde $\lambda_2$ focalisée sur l'élément de surface.

Dans une quatrième forme d'exécution du dispositif selon l'invention, un système optique classique amovible, constitué d'au moins une lentille réfractive, est placé entre la lentille 3 et son lieu de focalisation F. Il permet d'adapter une seule lentille 3 à de nombreuses applications différentes, en déplaçant à volonté le lieu F par rapport à la lentille 3.

Dans une cinquième forme d'exécution du dispositif selon l'invention, il est possible d'utiliser une lentille réfractive à aberration chromatique élevée, en lieu et place de la lentille holographique 3, pour focaliser les ondes lumineuses du faisceau 2 en une pluralité de foyer $F_1$ $F_2$... $F_n$. Le lieu de focalisation d'une telle lentille réfractive est nettement plus court que celui d'une lentille halographique; à ce titre, les deux types de lentilles sont complémentaires.

Dans une sixième forme d'exécution du dispositif selon l'invention, on utilise une lentille holographique à raies parallèles dite lentille holographique cylindrique. Ce type de lentille se distingue des lentilles à raies circulaires par la forme de son lieu de focalisation constitué d'une pluralité de foyers $F_1$, $F_2$,... $F_n$ en forme de segments de droites parallèles aux raies de la lentille.

Cette forme d'exécution peut être utilisée pour mesurer la distance séparant deux éléments de surface adjacents a et b, non coplanaires. Dans ce cas, le système d'analyse du spectre de la lumière réfléchie met en évidence deux ondes lumineuses $\lambda_a$ et $\lambda_b$ focalisées sur l'élément de surface a, respectivement sur l'élément de surface b. La distance cherchée est la différence des distances respectives de chaque élément de surface à la lentille. Ces distances sont déterminées comme précédemment à l'aide de la courbe d'étalonnage propre à la lentille à raies parallèles. Cette forme d'exécution permet de plus de trouver la position latérale dans le lieu de focalisation de la ligne de séparation des éléments de surface a et b par la comparaison de l'intensité relative des ondes $\lambda_a$ et $\lambda_b$ réfléchies par chacun desdits éléments de surface.

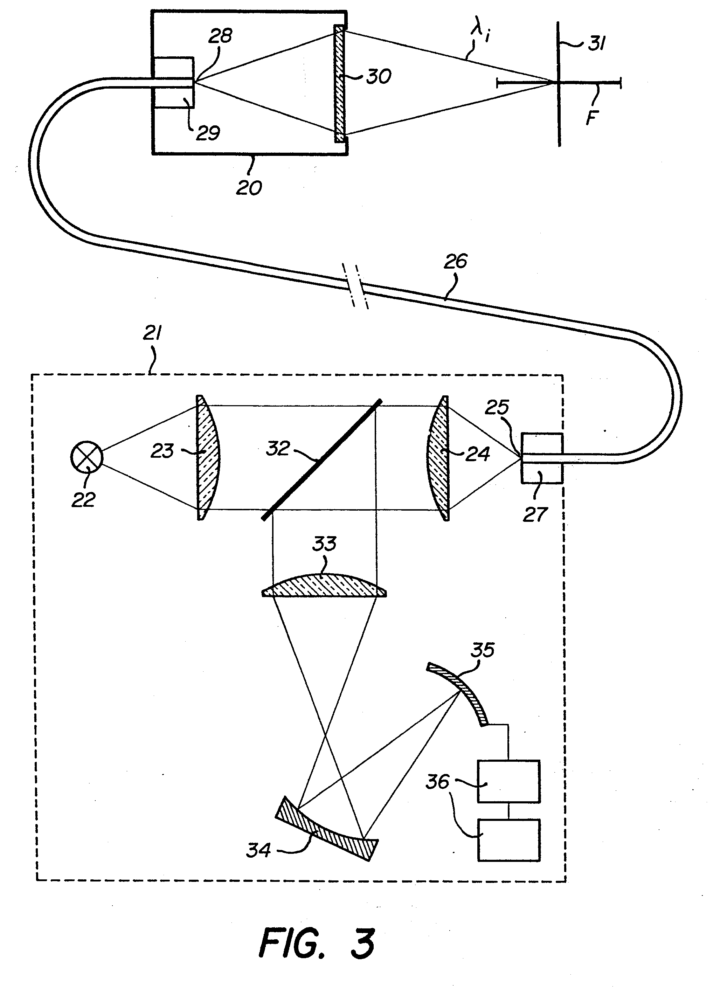

La figure 3 décrit une septième forme d'exécution de l'invention utilisant une fibre optique multimode 26, dont le diamètre du coeur est compris entre environ 10 et 100 $\mu$m reliant une tête de mesure 20 et un système opto-électrique 21. Ce système 21 est destiné à générer un faisceau lumineux polychromatique et à analyser la lumière réfléchie par un élément de surface 31 dont on cherche la position. Une source lumineuse polychromatique 22 permet de diriger un faisceau divergeant vers une première lentille réfractive 23 destinée à rendre ce faisceau parallèle. Une seconde lentille réfractive 24 focalise ledit faisceau sur la première extrémité 25 de la fibre optique 26 fixée par un connecteur 27. Un second connecteur 29 rend la seconde extrémité 28 de la fibre optique 26 solidaire de la tête de mesure 20. L'extrémité 28 agit comme source lumineuse ponctuelle et dirige les ondes $\lambda_1$ à $\lambda_n$ constituant le faisceau issu de la source 22 sur une lentille holographique 30. Cette lentille fait converger les ondes lumineuses en fonction de leur longueur d'onde respective, pour former un lieu de focalisation F. Les ondes réfléchies par l'élément de surface 31 sur la lentille 30 sont focalisées par cette dernière sur l'extrémité 28 de la fibre optique 26. L'extrémité 25 agit comme source ponctuelle d'ondes lumineuses réfléchies par l'élément de surface 31 sur la lentille 30, pour diriger celles-ci sur la lentille 24 dont le rôle est de former un faisceau parallèle desdites ondes réfléchies. Un miroir semi-transparent 32, placé entre les lentilles 23 et 24, dirige le faisceau parallèle des ondes réfléchies vers une lentille réfractive convergeante 33 qui dirige ces ondes sur une grille de diffraction 34 analogue à la grille 6 de la figure 1. Les ondes diffractées par la grille 34 sont dirigées sur un réseau de photodétecteurs 35, analogue au réseau 7 de la figure 1. Les signaux électriques issus des photodétecteurs sont traités par un ensemble logique 36 associant les fonctions du comparateur 8 et du calculateur 9 de la figure 1.

Il faut relever que, dans cette forme d'exécution, un diaphragme tel que le diaphragme 10 de la figure 1 n'est pas utile car l'entrée 28 de la fibre optique 26 a un effet analogue à ce diaphragme en ce qui concerne l'élimination au moins partielle des ondes focalisées hors de l'élément de surface et en ce qui concerne l'arrêt des ondes réfléchies par la lentille 30

A titre d'exemple d'application du capteur selon l'invention, il est possible de mesurer la largeur d'une pièce mécanique. Dans ce but, deux capteurs placés en opposition de part et d'autre de la pièce à mesurer permettent de trouver la largeur de ladite pièce par la relation:

$$X = d - X_1 - X_2$$

avec:    $X$ = dimension cherchée,

$d$ = distance séparant les deux capteurs,

$X_1$ = distance séparant la pièce du premier capteur

$X_2$ = distance séparant la pièce du deuxième capteur.

Le capteur selon l'invention permet évidemment d'effectuer des mesures dynamiques en étudiant les modifications du spectre de la lumière réfléchie en fonction du temps. L'analyse de ce spectre à intervalles réguliers permet de mesurer les déplacements d'un élément de surface. Cette dernière variante d'utilisation peut notamment trouver une application dans l'asservissement en position, en vitesse, ou en accélération, d'un bras de robot, ou dans la commande des machines d'usinage.

Les exemples d'application mentionnés ne constituent pas une liste exhaustive: le dispositif selon l'invention pourra avantageusement être utilisé dans tous les cas où une mesure de distance sans contact est souhaitable.

Il faut noter que le système d'analyse du spectre lumineux décrit ci-dessus est donné à titre d'exemple. L'homme du métier pourra facilement adopter tout autre système d'analyse spectrale existant. Il sera, par exemple, possible d'utiliser un système d'analyse comportant une grille de diffraction animée de mouvements oscillatoires pour diriger successivement chaque onde diffractée sur un photodétecteur unique. Lorsque le photodétecteur mesurera une intensité lumineuse maximale, la position correspondante de la grille sera représentative de la position de l'élément de surface dans le lieu de focalisation de la lentille, donc de la distance séparant l'élément de surface du capteur. Dans une autre forme d'exécution du système d'analyse du spectre de la lumière réfléchie, la grille de diffraction pourrait être fixe et le photodétecteur mobile. On peut évidemment utiliser des moyens autres qu'une grille de diffraction pour décomposer le spectre du faisceau réfléchi par l'élément de surface; à titre d'exemple non limitatif, ces moyens pouvant être constitués d'un prisme de dispersion ou d'un filtre spectral à couches minces.

R E V E N D I C A T I O N S

1. Procédé pour mesurer la position d'un élément de surface par rapport à une échelle de référence, selon lequel on forme au moins un faisceau lumineux englobant une pluralité d'ondes lumineuses de longueurs d'onde différentes et d'amplitudes sensiblement égales à partir d'une source disposée dans un plan sensiblement orthogonal à l'axe dudit faisceau et que l'on focalise lesdites ondes lumineuses en des points distincts situés le long d'un axe, ces points constituant ladite échelle de référence, la position de chacun desdits points le long de l'axe étant définie par la distance focale propre à chaque onde, chaque distance focale étant caractéristique d'une seule longueur d'onde, caractérisé par le fait que l'on décompose le spectre de la lumière réfléchie par l'élément de surface, que l'on mesure les densités lumineuses respectives des ondes constituant ledit spectre et que l'on compare ces densités entre elles pour déterminer l'onde dont la densité est maximale, cette onde étant caractéristique de la position dudit élément de surface par rapport à ladite échelle de référence.

2. Procédé selon la revendication 1, caractérisé par le fait que l'on sélectionne une partie des ondes constituant le faisceau de lumière réfléchie par l'élément de surface, avant de décomposer le spectre dudit faisceau de lumière.

3. Dispositif pour la mise en oeuvre du procédé selon la revendication 1, comprenant au moins une source de lumière polychromatique susceptible de générer un faisceau englobant une pluralité d'ondes lumineuses d'amplitude sensiblement égale, caractérisé par le fait qu'il comprend, de plus, une lentille focalisant chaque onde lumineuse de ce faisceau en un point distinct, caractéristique de la longueur d'onde respective, l'ensemble de ces points constituant un lieu de focalisation dudit faisceau, l'élément de surface dont on entend mesurer la position étant destiné à être placé en un point dudit lieu, des moyens pour analyser le spectre du faisceau lumineux réfléchi par cet élément de surface, des moyens pour déterminer la longueur d'onde de la composante de ce spectre dont la densité lumineuse est maximale, et des moyens pour déterminer la position dans ledit lieu du foyer de cette composante et, partant, celle de l'élément de surface.

4. Dispositif selon la revendication 3, caractérisé par le fait que la lentille focalisant chaque onde lumineuse est une lentille holographique à raies concentriques circulaires.

5. Dispositif selon la revendication 4, caractérisé par le fait que la lentille focalisant chaque onde lumineuse est une lentille holographique à raies concentriques de forme elliptique et est placée dans un plan incliné par rapport au plan normal à l'axe du faisceau lumineux.

6. Dispositif selon la revendication 3, caractérisé par le fait que la lentille focalisant chaque onde lumineuse est une lentille réfractive à aberration chromatique élevée.

7. Dispositif selon la revendication 3, caractérisé par le fait qu'il comprend de plus un système optique classique constitué d'au moins une lentille réfractive, entre la lentille focalisant chaque onde lumineuse et son lieu de focalisation.

8. Dispositif selon la revendication 3, caractérisé par le fait qu'il comprend de plus un diaphragme pour sélectionner une portion des ondes constituant le faisceau d'ondes réfléchies par l'élément de surface.

0142464

FIG. 2

FIG. 1

FIG. 3

Office européen
des brevets

**RAPPORT DE RECHERCHE EUROPEENNE**

EP  84 81 0435

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 506 196  (S.A. BROWN BOVERI)<br>* Titre;  page 1, paragraphe 4 - page 2, paragraphe 4; figures * | 1,3 | G 01 B  11/02<br>G 01 B  11/00 |
| | --- | | |
| A | IBM TECHNICAL DISCLOSURE BULLETIN, vol. 16, no. 2, juillet 1973, pages 433-434, New York; USA; J.R. MALIN: "Optical micrometer"<br>* Figures 1,2; pages 433-434 * | 1 | |
| | ----- | | |

| DOMAINES TECHNIQUES RECHERCHES (Int. Cl.4) |
|---|
| G 01 B<br>G 01 D<br>G 02 B |

Le présent rapport de recherche a été établi pour toutes les revendications

| Lieu de la recherche<br>LA HAYE | Date d'achèvement de la recherche<br>20-12-1984 | Examinateur<br>VISSER F.P.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82